# EUROPÄISCHE PATENTANMELDUNG

(11) **EP 4 147 568 A1**
(43) Veröffentlichungstag der Anmeldung: **15.03.2023**
(21) Anmeldenummer: 21196343.4
(22) Anmeldetag: 13.09.2021
(51) Int. Cl.: A01G 31/02

(54) **VORRICHTUNG UND VERFAHREN ZUR NÄHRSTOFFVERSORGUNG VON PFLANZEN UND PILZEN**

(71) Anmelder: Fraunhofer-Gesellschaft zur Förderung der angewandten Forschung e.V., 80686 München (DE)
(72) Erfinder: VOGEL, Simon, 52074 Aachen (DE); SCHILLBERG, Stefan, 52074 Aachen (DE)
(74) Vertreter: Roth, Andy Stefan

(57) **Zusammenfassung**

Beschrieben wird eine Vorrichtung (1) und ein Verfahren zur Bewässerung und Nährstoffversorgung von Pflanzen und Pilzen mit einer Versorgungseinheit (2), die über einen wenigstens mittelbar mit einer Wasser- und/oder Nährmediumversorgung (5) verbindbaren Einlass (3) verfügt und die einen Auslass (4) aufweist, durch den an wenigstens zwei Orten (A, B), die in Bezug auf eine Vertikale (C) in unterschiedlichen Höhen angeordnet sind, Wasser und/oder Nährmedium ausbringbar ist.

Die beschriebene Lösung zeichnet sich dadurch aus, dass die Versorgungseinheit (2) über einen mit einem Antrieb (7) verbindbaren Antriebsstrang (8) und am Auslass (4) über wenigstens eine an den Antriebsstrang (8) gekoppelte Düse (6) zur Ausbringung des Wassers und/oder Nährmediums verfügt, wobei die Düse (6) aufgrund einer Aktivierung des Antriebsstrangs (8) zu wenigstens zwei der in unterschiedlicher Höhe angeordneten Orte (A, B) bewegbar ist.

## Beschreibung

Die Erfindung betrifft eine Vorrichtung und ein Verfahren zur Nährstoffversorgung von Pflanzen und Pilzen mit einer Versorgungseinheit, die über einen wenigstens mittelbar mit einer Wasser- und/oder Nährmediumversorgung verbindbaren Einlass verfügt und die ferner einen Auslass aufweist, durch den an wenigstens zwei Orten, die sich in einer zumindest nahezu vertikal angeordneten Ebene befinden, Wasser und/oder Nährmedium in eine Umgebung ausbringbar ist.

Generell sind aus dem Stand unterschiedliche Anlagen bekannt, die eine automatisierte Aufzucht von Pflanzen oder Pilzen, insbesondere von Nutzpflanzen, ermöglichen. Wesentlich an den bekannten Anlagen ist, dass eine Pflanzenaufzucht auf vergleichsweise kleinem Raum bei gleichzeitig effektivem Einsatz von Wasser, Nährmedium und Energie erfolgt, da sich die Anlagen üblicherweise in Räumen mit für das Wachstum der Pflanzen optimierbaren Bedingungen, insbesondere bezüglich des herrschenden Klimas, der Strahlung und der Versorgung mit Wasser und Nährstoffen, befinden. Mithilfe der bekannten Anlagen wird hierbei eine nahezu witterungs- und jahreszeitunabhängige Aufzucht von Pflanzen oder Pilzen ermöglicht. Durch den Einsatz spezieller Anlagen zur Wasserrückgewinnung wird für die Aufzucht der Pflanzen ferner deutlich weniger Wasser als bei der Bewirtschaftung von Äckern im Freien benötigt Außerdem wird vergleichsweise wenig Dünger benötigt und durch die Pflanzenaufzucht in vollklimatisierten Räumen ist ein pestizidfreier Pflanzenanbau möglich.

Die insbesondere in den letzten Jahrzehnten immer stärker genutzten Anlagen zur Kultivierung und Aufzucht von Gewächshauskulturen, wie etwa für Tomaten, Gurken und Salat, ermöglichen so die Massenproduktion von landwirtschaftlichen Produkten in vollklimatisierten Räumen unter strenger Kontrolle der externen Einflüsse. In diesem Zusammenhang sind Systeme zur Aufzucht von Pflanzen oder Pilzen bekannt, bei denen die Pflanzen oder Pilze in einem Regalsystem angeordnet, während der Wachstumsphase automatisiert mit Nährmedium versorgt und zumindest zeitweise während ihres Wachstums bewegt und einer Bestrahlung mit spektral abgestimmtem Licht ausgesetzt werden.

Aus der WO 2010/008335 A1 ist eine Anlage zur automatisierten Pflanzenaufzucht bekannt, bei der die Pflanzen in Pflanzenaufzuchtbehältern angeordnet und auf schräg verlaufenden Streckenabschnitten von unten nach oben sowie von oben nach unten gefördert werden. Außerdem werden die Pflanzen während ihrer Bewegung durch eine Beleuchtungseinrichtung beleuchtet und durch ein Bewässerungssystem mit Wasser oder Nährmedium versorgt. Die Bewässerung erfolgt hierbei derart, dass die Pflanzenaufzuchtbehälter in mit Wasser oder Nährmedium befüllbaren Wannen angeordnet sind, und Öffnungen aufweisen, durch die das in den Wannen befindliche Wasser oder Nährmedium in die Behälter in Richtung des Wurzelwerks der Pflanzen gelangt.

Darüber hinaus ist aus der US 2009/1653731 eine Anlage zur automatisierten Pflanzenaufzucht bekannt, bei der Pflanzen auf hierfür vorgesehenen Tragschienen auf einer rotierenden Trommel angeordnet werden. Die Pflanzen sind derart angeordnet, dass sie mit ihrem Blattwerk oder ihren Früchten in das Innere der Trommel ragen, sodass die Pflanzen während der Drehung der Trommel teilweise Kopf hängend gefördert werden. Eine Versorgung der bewegten Pflanzen mit Wasser und/oder Nährmedium erfolgt bei dieser technischen Lösung durch eine im Bodenbereich der Anlage angeordnete Wanne, durch die das Wurzelwerk der Pflanzen, die sich gerade in diesem Bereich befinden, hindurchbewegt wird.

Beiden zuvor beschriebenen Anlagen zur automatisierten Pflanzenaufzucht ist in Bezug auf die Bewässerung der Pflanzen gemein, dass das Wurzelwerk zumindest zeitweise in direkten Kontakt mit Wasser oder Nährmedium, das in einer Wanne bevorratet wird, in Kontakt gebracht wird. Eine derartige Bewässerungsvorrichtung wird auch als hydroponisches System bezeichnet.

Im Übrigen ist aus der EP 3 409 103 A1 eine Anlage für die automatisierte Pflanzenaufzucht bekannt, die eine besonders effektive und flexibel gestaltbare Kultivierung von Pflanzen, die auf einem entlang einer Förderstrecke bewegten Förderband fixiert sind, ermöglicht. Hierbei sind die Pflanzen derart auf dem Förderband fixiert, dass das Blattwerk auf einer Oberseite und das Wurzelwerk auf einer der Oberseite gegenüberliegenden Unterseite des Förderbandes über dieses hinausragen.

Die Förderstrecke verfügt darüber hinaus über zumindest annähernd vertikal angeordnete Förderstreckenabschnitte, auf denen die aufzuziehenden Pflanzen von unten nach oben sowie von oben nach unten bewegt werden. Die vertikalen Förderstreckenabschnitte können kreisförmig oder oval oder Teil einer mäanderförmig ausgebildeten Förderstrecke sein. Durch die beschriebenen technischen Merkmale wird eine besonders flexible Gestaltung einer automatisiert arbeitenden Pflanzenaufzuchtanlage ermöglicht, da sowohl die Beleuchtung der Pflanzen, die Anordnung der Pflanzen auf dem Förderband als auch deren Versorgung mit Nährstoffen flexibel an die jeweiligen Erfordernisse, insbesondere an die zu kultivierende Pflanzenart und die Wachstumsphase, angepasst werden kann.

Eine Prototypenanlage, die die zuvor beschriebene technische Lösung umsetzt, ist am Fraunhofer-Institut für Molekularbiologie und Angewandte Oekologie IME aufgebaut und bereits erprobt worden (Fraunhofer IME entwickelt Indoor-Pflanzenproduktionssystem; Pressemitteilung des Fraunhofer-Instituts für Molekularbiologie und Angewandte Oekologie IME vom 21.9.2020). Diese Anlage verfügt über ein aeroponisches Bewässerungssystem, bei dem die Pflanzenwurzeln während des Transports in der Luft hängen und dort mit Wasser und Nährstoffen besprüht werden.

Ausgehend von den aus dem Stand der Technik bekannten Anlagen zur automatisierten Pflanzenzucht besteht generell ein Bedarf darin, die Versorgungseinheiten, mit denen die aufzuziehenden Pflanzen mit Wasser und/oder einem Nährmedium versorgt werden, sowohl hinsichtlich des Energie- und Wasserbedarfs effizient auszuführen als auch eine konstruktiv einfache Gestaltung vorzusehen. Für die Nährstoffversorgung der Pflanzen haben sich aeroponische Bewässerungssysteme daher als vorteilhaft erwiesen, wobei die bekannten aeroponischen Bewässerungssysteme Versorgungseinheiten über eine Mehrzahl von stationär in einem Raster angeordnete Düsen verfügen, durch die Wasser und/oder Nährmedium, teilweise gepulst in Richtung des Wurzelwerks der Pflanzen ausgebracht wird. Ein Problem dieser bekannten Versorgungseinheiten besteht darin, dass eine große Anzahl von verteilt angeordneten Düsen benötigt wird, um Wasser und/oder Nährmedium in ausreichender Menge auf die gesamte Kultivierungsfläche, in der die Wurzelwerke der bewegten Pflanzen angeordnet sind, auszubringen. Aufgrund der Vielzahl von Düsen und deren Anordnung sind Wartungs- und Reparaturarbeiten an den bekannten Bewässerungssystemen oft schwierig, insbesondere, da bestimmte Düsen nur schlecht zugänglich sind. Außerdem sind regelmäßig lange, verzweigte Rohrsysteme erforderlich, um die Vielzahl von Düsen mit Wasser und/oder Nährmedium mit dem erforderlichen Druck versorgen zu können.

Ein weiteres Problem ergibt sich dadurch, dass ein Leerlaufen des mit Wasser und/oder Nährmedium gefüllten Rohrsystems bei gepulstem Betrieb oder einer Unterbrechung sicher verhindert werden muss. Aus diesem Grund sind die bislang verwendeten Düsen üblicherweise mit vergleichsweise teuren Tropfstopp-Ventilen ausgestattet Ein weiteres Problem bei der Verwendung einer großen Anzahl von Düsen ergibt sich dadurch, dass über die gesamte Betriebszeit eine nicht unerhebliche Anzahl von Düsen zumindest zeitweise, insbesondere durch Verstopfungen, ausfällt und die erforderliche Reparatur oder der Austausch nur unter erheblichem Aufwand möglich ist.

Ausgehend von den aus dem Stand der Technik bekannten technischen Lösungen und den zuvor geschilderten Problemen liegt der Erfindung die Aufgabe zu Grunde, eine Vorrichtung zur Versorgung von Pflanzen oder Pilzen, die zu ihrer Kultivierung oder Aufzucht entlang der Förderstrecke einer Anlage zur automatisierten Pflanzen-/Pilzaufzucht bewegt werden, derart weiterzubilden, dass einerseits eine effektive Versorgung der Pflanzen bzw. Pilze mit Wasser und/oder Nährmedium sichergestellt ist und andererseits der technische Aufwand, aber auch die Herstellungs- und Betriebskosten für ein derartiges Bewässerungssystem minimiert werden. Hierbei ist es von besonderer Bedeutung, dass mit einer möglichst geringen Anzahl von Düsen zuverlässig eine große Fläche mit Wasser und/oder mehr Medium versorgt werden kann. Darüber hinaus sollte die anzugebende Vorrichtung der Versorgung von bewegten Pflanzen/Pilzen mit Wasser und/oder Nährmedium auf einfache Weise zu warten sein und gleichzeitig die Gefahr von Reparaturarbeiten und den damit verbundenen Anlagenausfällen oder Pflanzen-/Pilzausschuss verringert werden. Des Weiteren sollte es ohne besonderen konstruktiven, anlagentechnischen und/oder wirtschaftlichen Aufwand möglich sein, das anzugebende Versorgungssystem mit bekannten Pflanzen-/Pilzaufzuchtanlagen zu kombinieren bzw. in diese zu integrieren. Auch eine einfache Automatisierung sowie ein weitgehend störungsfreier und wirtschaftlicher Betrieb einer Vorrichtung zur Versorgung von in einer Anlage zur automatisierten Pflanzenaufzucht bewegten Pflanzen und/oder Pilzen sollte sichergestellt sein.

Die vorstehend beschriebene Aufgabe wird mit einer Vorrichtung zur Nährstoffversorgung gemäß Anspruch 1, sowie einem Verfahren zur Nährstoffversorgung nach Anspruch 10 gelöst Im Weiteren ist in Anspruch 14 eine Anlage zur automatisierten Kultivierung oder Aufzucht von Pflanzen und/oder Pilzen, die die vorstehend beschriebene Aufgabe löst angegeben. Vorteilhafte Ausführungsformen der Erfindung sind Gegenstand der abhängigen Ansprüche und werden in der folgenden Beschreibung unter teilweiser Bezugnahme auf Figuren näher erläutert

Die Erfindung betrifft eine Vorrichtung zur Nährstoffversorgung von Pflanzen und Pilzen mit einer Versorgungseinheit, die über einen wenigstens mittelbar mit einer Wasser- und/oder Nährmediumversorgung verbindbaren Einlass verfügt und die einen Auslass aufweist, durch den an wenigstens zwei Orten bzw. Stellen, die in Bezug auf eine Vertikale in unterschiedlicher Höhe angeordnet sind, Wasser und/oder Nährmedium ausbringbar ist. Erfindungsgemäß zeichnet sich die Vorrichtung dadurch aus, dass die Versorgungseinheit über einen mit einem Antrieb verbindbaren Antriebsstrang und am Auslass über wenigstens eine an den Antriebsstrang gekoppelte Düse zur Ausbringung des Wassers und/oder Nährmediums verfügt, wobei die Düse aufgrund einer Aktivierung des Antriebsstrangs zu wenigstens zwei der in unterschiedlicher Höhe angeordneten Orte bewegbar ist. Dass die wenigstens zwei Orte, an denen Wasser und/oder Nährmedium ausgebringbar ist, in Bezug auf eine Vertikale in unterschiedlicher Höhe angeordnet sind, bedeutet, dass der Abstand wenigstens zweier Ausbringungsorte von einem Bodenbereich, auf dem die erfindungsgemäße Vorrichtung zur Nährstoffversorgung angeordnet ist, unterschiedlich ist Bevorzugt befinden sich die beiden Ausbringungsorte, an die die Düse bewegbar ist, in einer Ebene, die zumindest nahezu vertikal angeordnet ist. Auf vorteilhafte Weise ist es denkbar, dass die wenigstens eine Düse an eine Vielzahl von Orten zur Ausbringung von Wasser und/oder Nährmedium bewegbar ist, sodass mit wenigstens einer, insbesondere einer nur kleinen Anzahl von Düsen die Ausbringung von Wasser und/oder Nährmedium über einen vergleichsweise großen Flächenbereich erfolgen kann. Gegenüber den bekannten technischen Lösungen lässt sich so die Anzahl der benötigten Düsen verringern und es kann vorzugsweise auf eine gepulste Ausbringung von Wasser- und/oder Nährmedium verzichtet werden.

Vielmehr ist gemäß der Erfindung somit zur Ausbringung von Wasser und/oder einem Nährmedium eine Versorgungseinheit mit wenigstens einer Düse vorgesehen, die zumindest in vertikaler Richtung, bevorzugt in vertikaler und horizontaler Richtung bewegbar ist Gemäß einer speziellen Weiterbildung erfolgt die Bewegung der wenigstens einen Düse in einer Ebene, besonders bevorzugt in einer zumindest nahezu vertikalen Ebene. In diesem Zusammenhang ist es auf vorteilhafte Weise denkbar, dass die Ebene, in der die wenigstens eine Düse bewegbar ist, zumindest nahezu parallel zu einer Ebene angeordnet ist, in der sich die zu kultivierenden oder aufzuziehenden Pflanzen und/oder Pilze, insbesondere deren Wurzelwerk bzw. Myzelien, befinden. Mit Hilfe wenigstens einer derart bewegbar bzw. verfahrbar ausgeführten Düse kann an den wenigstens zwei Orten eine bedarfsgerechte Ausbringung der jeweils erforderlichen Menge von Wasser und/oder von einem Nährmedium, das wenigstens einen Nährstoff enthält, in die Umgebung, insbesondere in einen Bereich, in dem sich das Wurzelwerk der Pflanzen oder Myzelien der Pilze befinden, erfolgen.

Eine derartige Vorrichtung lässt sich auf bevorzugte Weise mit einer Anlage zur automatisierten Pflanzen-/Pilzaufzucht kombinieren oder in eine solche integrieren, bei der aufzuziehende oder zu kultivierende Pflanzen und/oder Pilze entlang einer Förderstrecke zumindest abschnittsweise auf wenigstens einem vertikal oder schräg zur Vertikalen angeordneten Teilabschnitt bewegt werden. Die erfindungsgemäße Vorrichtung verfügt daher über zumindest eine Düse, die mithilfe des Antriebsstrangs, der mit einem geeigneten Antrieb verbindbar ist, derart bewegbar bzw. verfahrbar ist, dass Wasser und/oder Nährmedium an wenigstens zwei Orten im Bereich der vertikalen Förderstreckenteilabschnitte ausbringbar ist, die sich in unterschiedlicher Höhe in Bezug auf eine Vertikale oder den Bodenbereich, auf dem die Vorrichtung angeordnet ist, befinden.

Bevorzugt wird die wenigstens eine Düse über wenigstens ein geeignetes Rohr- und/oder einen Schlauch mit Wasser und/oder Nährmedium versorgt, wobei das Versorgungssystem mit dem Rohr und/oder dem Schlauch insgesamt derart flexibel gestaltet ist, dass die wenigstens eine Düse an unterschiedlichen Orten mit der benötigten Menge von Wasser und/oder Nährmedium versorgbar ist. Von besonderem Vorteil ist es, wenn zumindest eine Fördereinheit, insbesondere eine Pump-, Turbo- und/oder Düseneinheit, derart strömungstechnisch mit dem Rohr und/oder Schlauch verbunden ist, dass wenigstens ein Strömungsparameter, insbesondere der Druck und/oder der Volumenstrom, eines durch das Rohr und/oder Schlauch strömenden Wasser- und/oder Nährmediumstroms, gezielt variierbar, bevorzugt auf einen gewünschten Wert einstellbar ist

Eine erfindungsgemäß vorgesehene Düse ist derart ausgeführt und vom Antriebsstrang bewegbar, dass diese, sobald die Vorrichtung zur Nährstoffversorgung mit einer Anlage zur automatisierten Pflanzenaufzucht kombiniert wird oder Teil dieser ist, Wasser und/oder ein Nährmedium in Richtung des Wurzelwerks der aufzuziehenden Pflanzen und/oder der Myzelien der Pilze erfolgt. In diesem Zusammenhang ist es denkbar, die Düse derart zu gestalten, dass Wasser und/oder Nährmedium in Form eines Strahls, eines Sprühnebels und/oder eines Aerosols, das entsprechend Wasser- und/oder Nährmediumtropfen aufweist, in Richtung des Wurzelwerks ausbringbar ist Von besonderem Vorteil ist es, wenn die wenigstens eine bewegbar angeordnete Düse auf geeignete Weise verstellbar ist, sodass die Strahlform, mit der das Wasser und/oder Nährmedium ausgebracht wird, bedarfsgerecht variiert werden kann.

In einer bevorzugten Ausführungsform der Erfindung weist der Antriebsstrang wenigstens eine zumindest annähernd vertikal angeordnete Führung auf, mit der die Düse wenigstens mittelbar verbunden ist und zu der die Düse eine Relativbewegung ausführen kann. Die wenigstens eine Führung verfügt vorzugsweise über wenigstens eine Führungsschiene, vorzugsweise einen durch zumindest zwei nahezu vertikal angeordnete Führungsschienen gebildeten Rahmen, mit einer Fahrstrecke, entlang der die Düse, die bevorzugt an einer geeigneten Düsenhalterung befestigt ist, verfahrbar ist.

Auf vorteilhafte Weise ist die wenigstens eine Führungsschiene wenigstens mittelbar mit einem Teil des Antriebsstrangs, insbesondere mit einem Antriebselement, etwa in Form einer Zahnstange, verbunden, entlang dem die Düse bzw. eine Düsenkopfhalterung, an der die Düse befestigt ist, bewegbar ist Vorzugsweise ist in diesem Fall an wenigstens einem Ende der Düsenkopfhalterung ein in die Zahnstange eingreifendes Zahnrad vorgesehen. Denkbar sind in diesem Zusammenhang allerdings auch andere Antriebselemente, die eine Bewegung der Düse oder der Düsenkopfhalterung gemeinsam mit der Düse entlang der wenigstens einen Führungsschiene ermöglichen. So ist es denkbar, dass innerhalb oder außerhalb der Führungsschiene wenigstens ein Zug- oder Druckelement, beispielsweise ein Zugseil oder Kolben, vorgesehen ist, das eine gezielte Bewegung der Düse, insbesondere der mit der Düse verbundenen Düsenhalterung, entlang der Führungsschiene ermöglicht. Die Zuführung der benötigten Energie, die in Form von elektrischer Energie, Druckluft und/oder einem Hydraulikfluid bereitgestellt wird, erfolgt bevorzugt über flexible Schlauchleitungen, die eine ungehinderte Bewegung der Düse relativ zu der wenigstens einen Führungsschiene ermöglichen.

In einer ganz speziellen Ausführungsformen der Erfindung sind wenigstens zwei Führungsschienen vorgesehen, die beidseitig einer als Düsenhalterung ausgeführten Strebe angeordnet sind, wobei die Strebe gemeinsam mit der Düse relativ zu den in vertikaler Richtung verlaufenden Führungsschienen in vertikaler Richtung aufwärts und abwärts bewegbar ist. Der jeweils verwendete Antriebsstrang ist somit auf vorteilhafte Weise derart ausgeführt, dass eine Bewegung der wenigstens einen Düse und/oder der Düsenhalterung, an der wenigstens eine Düse befestigt ist, in vertikaler Richtung erfolgt. Ergänzend ist es denkbar, dass die Düse gleichzeitig oder zu einem späteren Zeitpunkt auch in horizontaler Richtung, beispielsweise entlang einer Düsenhalterung, die eine horizontale Strebe aufweisen kann, bewegbar ist.

Gemäß einer speziellen Weiterbildung der Erfindung erfolgt die Bewegung der wenigstens einen Düse mit konstanter Geschwindigkeit. Alternativ oder ergänzend ist es denkbar, dass die Bewegung wenigstens zeitweise beschleunigt oder mit Unterbrechungen erfolgt.

Von besonderem Vorteil ist es, wenn die Bewegungsrichtung, die Geschwindigkeit und/oder die Beschleunigung der Düse mithilfe einer Steuerung bedarfsgerecht, insbesondere in Abhängigkeit der mit Wasser und/oder Nährmedium zu versorgenden Pflanzen oder Pilze und/oder der jeweiligen Wachstumsphase, in der sich die Pflanzen oder Pilze befinden, eingestellt wird. Im Weiteren ist es auf vorteilhafte Weise denkbar, dass zwischen der wenigstens einen Düse und/oder einer Düsenkopfhalterung und einer zumindest mittelbar mit diesen verbundenen Führungsschiene wenigstens ein Schwenk- oder Klappmechanismus angeordnet ist, der sicherstellt, dass die Düse und/oder die Düsenhalterung mit der daran befestigten Düse auf vergleichsweise einfache Weise in eine Wartungs- oder Reparaturposition geschwenkt oder geklappt werden kann. Denkbar ist in diesem Zusammenhang, dass der Klapp- oder Schwenkmechanismus derart ausgeführt ist, dass eine als Düsenhalterung dienende Strebe in Richtung einer der Führungsschienen geklappt oder geschwenkt wird und so in der Wartungs- oder Reparaturposition zumindest annähernd parallel zur Führungsschiene angeordnet und die wenigstens eine Düse vergleichsweise einfach von einer Seite erreichbar ist.

In jedem Fall ist es von Vorteil, wenn die Möglichkeit besteht, die wenigstens eine, vorzugsweise innerhalb einer zumindest nahezu vertikal angeordneten Ebene gezielt bewegbare bzw. verfahrbare Düse in eine Position zu schwenken oder zu klappen, sodass eine erleichterte Wartung, Reparatur oder Austausch der Düse möglich ist.

In einer besonderen Weiterbildung der Erfindung verfügt der Antriebsstrang, durch den eine gezielte Bewegung der wenigstens einen Düse zu wenigstens zwei voneinander beabstandeten Orten, die vorzugsweise in einer Ebene liegen, herbeiführbar ist, über wenigstens einen Tragarm mit zumindest einem Gelenk aufweist, wobei die Düse wenigstens mittelbar an dem Tragarm befestigt ist. Bevorzugt ist es in diesem Fall denkbar, dass der Tragarm, an dem die wenigstens eine Düse befestigt ist, Teil eines Industrieroboters ist, mit dem die Düse vergleichsweise schnell und genau zu unterschiedlichen Zeitpunkten an wenigstens zwei Orte, die bevorzugt in einer vertikalen Ebene angeordnet sind, bewegbar ist, um Wasser und/oder Nährmedium in die Umgebung, insbesondere eine Umgebung, in der sich das Wurzelwerk von mithilfe einer automatisiert arbeitenden Pflanzenaufzuchtanlage bewegten Pflanzen oder Myzelien von Pilzen befinden. Durch Einsatz eines geeigneten Roboterarms, der Teil eines Industrieroboters sein kann, ist es auf vorteilhafte Weise möglich, eine Düse und/oder eine spezielle Anordnung von Düsen mit oder ohne Düsenhalterung einerseits bedarfsgerecht auf die gewünschte Weise zu bewegen und andererseits eine genaue Positionierung sicherzustellen.

Gemäß einer anderen speziellen Weiterbildung der Erfindung ist vorgesehen, dass die Versorgungseinheit wenigstens ein Förderelement aufweist, durch das ein Druck und/oder ein Volumenstrom eines von einer Nährmediumversorgung bereitgestellten und zu der wenigstens einen Düse zu fördernden Wasser- und/oder Nährmediumstroms wenigstens bereichsweise gezielt veränderbar ist. Bei dem Förderelement kann es sich um eine Pumpe in Form einer Radial-, Schrauben-, Schnecken- oder Kolbenpumpe, um einen Strahlverdichter und/oder um einen Turboverdichter handeln. Wesentlich für diese Ausführungsform ist, dass die Sollwerte für Druck und/oder Volumenstrom eines zu der wenigstens einen bewegbaren Düse geleiteten Wasser- und/oder Nährmediumstroms, die bevorzugt über eine Steuerung vorgegeben werden können, auf geeignete Weise, insbesondere in Abhängigkeit der Art der zu versorgenden Pflanzen und/oder Pilze, der jeweiligen Wachstumsphase und/oder eines vorgegebenen Tag-Nacht-Rhythmus anpassbar sind. In diesem Zusammenhang ist es denkbar, dass die Strömungsform der Wasser- und/oder Nährmediumströmung bedarfsgerecht als laminare oder turbulente Strömung eingestellt wird und/oder die in der zu der wenigstens einen Düse führenden Versorgungsleitung herrschende Temperatur und/oder Zusammensetzung der Wasser- und/oder Nährmediumströmung mittels geeigneter Elemente, wie etwa Heizelemente und/oder Strömungshindernisse, gezielt einstellbar ist

Gemäß einer besonderen Ausführungsform der Erfindung ist vorgesehen, dass der Antriebsstrang an einen Antrieb mit wenigstens einer elektrischen, pneumatischen und/oder hydraulischen Antriebseinheit koppelbar ist. Die Erfindung betrifft damit auch eine erfindungsgemäß ausgeführte Vorrichtung zur Wasser- und/oder Nährstoffversorgung, die an eine elektrische, pneumatische und/oder hydraulischen Antriebseinheit zur Aktivierung des Antriebsstrangs und Bewegung der wenigstens einen Düse gekoppelt ist Bei Realisierung dieser Ausführungsform ist es im Übrigen von besonderem Vorteil, wenn der Antriebsstrang zur Aktivierung an einen Antrieb mit wenigstens einer hydraulischen Antriebseinheit gekoppelt ist, der zumindest zeitweise Wasser- und/oder Nährmedium aus der Nährmediumversorgung als Antriebsfluid zugeführt wird. Das durch die Nährmediumversorgung, beispielsweise ein verzweigtes Versorgungssystem und/oder ein Tank, bereitgestellte Wasser- und/oder Nährmedium wird gemäß dieser speziellen Ausführungsformen zur Einleitung von Energie in wenigstens eine Antriebseinheit verwendet, um so den Antriebsstrang zu aktivieren und die wenigstens eine Düse in Bewegung zu versetzen. Hierbei ist bevorzugt eine geeignete Druckerhöhungseinheit vorgesehen, um der Antriebseinheit wenigstens zeitweise einen Wasser- und/oder Nährmediumstrom mit der für die gewünschte Bewegung der wenigstens einen Düse erforderlichen hydraulischen Energie zuzuführen.

In einer ganz speziellen Ausgestaltung der Erfindung ist zumindest ein Sensor und/oder eine Steuereinheit vorgesehen, sodass wenigstens ein Betriebsparameter einer erfindungsgemäß ausgeführten Vorrichtung während der Bewässerung und/oder der Nährstoffversorgung der aufzuziehenden Pflanzen oder Pilze erfasst und auf geeignete Weise einer Steuerung der Bewässerung und/oder Nährstoffversorgung zu Grunde gelegt werden kann. Vorzugsweise wird wenigstens ein Positions-, Geschwindigkeits- und/oder Beschleunigungssensor verwendet, um die entsprechende Geschwindigkeit, Beschleunigung und/oder eine Position, an der sich die bewegbare bzw. verfahrbare Düse befindet, zu erfassen und bei Bedarf der weiteren Ansteuerung der Düse und/oder des Antriebsstrangs zugrunde zu legen. Im Übrigen ist es denkbar, alternativ oder ergänzend einen Sensor vorzusehen, mit dem wenigstens ein Strömungsparameter, insbesondere ein Druck, eine Strömungsgeschwindigkeit und/oder eine Strömungsform erfasst wird.

Ebenso ist es denkbar, wenigstens einen Sensor vorzusehen, der eine Temperatur, Dichte und/oder eine Zusammensetzung des geförderten Wassers und/oder Nährmediums und/oder zumindest einen Betriebsparameter des Antriebsstranges und/oder eines an den Antriebsstrang erfasst, insbesondere um den oder die erfassten Messwerte einer Steuerung oder Regelung einer erfindungsgemäßen Vorrichtung zur Bewässerung und/oder Nährstoffversorgung von Pflanzen oder Pilzen zugrunde zu legen. Auf Grundlage der Sensordaten können ggf. Empfehlungen für die Düsenwartung bzw. deren Fehlfunktion erfasst werden.

Im Übrigen betrifft die Erfindung auch ein Verfahren zur Bewässerung und/oder Nährstoffversorgung von Pflanzen und Pilzen, bei dem einer Versorgungseinheit Wasser und/oder Nährmedium zugeführt wird und das Wasser und/oder Nährmedium an wenigstens zwei Orten, die sich in Bezug auf eine Vertikale in unterschiedlicher Höhe befinden, also in Bezug auf einen Boden, auf dem die Vorrichtung aufgestellt ist, in unterschiedlicher Höhe angeordnet sind, aus einem Auslass der Versorgungseinheit in eine Umgebung, in der die Pflanzen und/oder Pilze angeordnet sind, ausgebracht wird. Das erfindungsgemäße Verfahren zeichnet sich dadurch aus, dass zur Ausbringung des Wassers und/oder Nährmediums wenigstens eine Düse durch einen von einem Antrieb aktivierbaren Antriebsstrang zu wenigstens zwei der in unterschiedlicher Höhe angeordneten Orte bewegt wird. Vorzugsweise befinden sich die beiden Orte, zu denen die wenigstens eine Düse bewegt wird, in einer zumindest nahezu vertikal angeordneten Ebene.

Es ist somit wesentlich für das erfindungsgemäße Verfahren, dass die Versorgungseinheit wenigstens eine Düse aufweist, die zu wenigstens zwei Orten bewegt wird, die bezüglich einer Vertikalen in unterschiedlicher Höhe angeordnet sind und sich besonders bevorzugt in einer zumindest nahezu vertikal angeordneten Ebene befinden. Mithilfe des erfindungsgemäßen Verfahrens wird durch eine geeignete Bewegung wenigstens einer Düse, bevorzugt einer Mehrzahl von Düsen, eine effektive und zügige Versorgung von Pflanzen und/oder Pilzen, die in einer Anlage zur automatisierten Pflanzen-/Pilzaufzucht zumindest teilweise entlang eines zumindest nahezu vertikal verlaufenden Förderstreckenabschnitts bewegt werden, erreicht Da die Versorgung der Pflanzen oder Pilze mithilfe mindestens einer bewegten Düse erfolgt, müssen nicht eine Vielzahl von Düsen, insbesondere in einen gepulsten Betrieb, verwendet werden, um die gewünschte Bewässerung und/oder Nährstoffversorgung von während des Wachstums bewegten Pflanzen oder Pilzen sicherzustellen. Insbesondere der Aufwand für erforderliche Wartungs-, Reparatur- und Austauscharbeiten wird so deutlich reduziert

Gemäß einer vorteilhaften Ausführungsform des erfindungsgemäßen Verfahrens wird die wenigstens eine Düse zumindest nahezu parallel zu einer Ebene, in der die bewegten, aufzuziehenden oder zu kultivierenden Pflanzen oder Pilze angeordnet sind, bewegt. Die Bewegung erfolgt in vertikaler und besonders bevorzugt in vertikaler und horizontaler Richtung, wobei die wenigstens eine Düse gleichzeitig oder aber nacheinander in vertikaler und horizontaler Richtung bewegt werden kann. Die Düse wird auf diese Weise bevorzugt innerhalb einer zumindest nahezu vertikal angeordneten Ebene auf- und/oder abwärts und/oder seitwärts bewegt.

Weiterhin ist es bevorzugt denkbar, dass die Düse zumindest während einer Bewegung zwischen zwei Umkehrpunkten mit konstanter Geschwindigkeit bewegt wird. In Abhängigkeit der Art der aufzuziehenden in Pflanzen oder Pilze oder der Wachstumsphase, in der sich diese gerade befinden, ist es alternativ denkbar, dass die wenigstens eine verwendete Düse zumindest zeitweise beschleunigt oder mit Bewegungspausen betrieben wird. Im Weiteren ist es von Vorteil, wenn ein Druck, ein Volumenstrom und/oder eine Strahlform, mit der Wasser und oder Nährmedium in die Umgebung, in der die Pflanzen und oder Pilze angeordnet sind, ausgebracht wird, verändert wird. Hierbei erfolgt vorzugsweise eine gezielte Variation des Drucks, Volumenstroms und/oder Strahlform derart, dass die aufzuziehenden Pflanzen oder Pilze bedarfsgerecht mit einem Wasser- oder Nährmediumstrahl, mit vernebeltem Wasser und/oder Nährmedium oder mit einem Aerosol, das Wasser- und/oder Nährmediumtropfen aufweist, beaufschlagt werden.

Weiterhin betrifft die Erfindung eine Anlage zur automatisierten Pflanzen- und Pilzaufzug mit einer Vorrichtung, die gemäß zumindest einer der oben beschriebenen Ausführungsformen gestaltet ist und/oder die geeignet ist, das zuvor beschriebene Verfahren gemäß wenigstens einer seiner Ausführungsformen umzusetzen.

Eine erfindungsgemäß ausgeführte Vorrichtung und ein entsprechendes Verfahren sind somit auf vorteilhafte Weise geeignet, um mit einer Anlage zur automatisierten Pflanzen- oder Pilzaufzucht kombiniert bzw. in diese integriert zu werden. Hierbei ist es von besonderem Vorteil, wenn die Anlage wenigstens einen Förderstreckenabschnitt aufweist, auf dem die aufzuziehenden Pflanzen und/oder Pilze zumindest in nahezu vertikaler Richtung aufwärts oder abwärts bewegt werden. Auf vorteilhafte Weise ist es ferner denkbar, dass die Pflanzen und/oder Pilze derart relativ zu einem entlang der Förderstrecke bewegten Förderband fixiert sind, dass das Wurzelwerk der Pflanzen und Myzelien der Pilze auf einer Seite des Förderbandes über die Oberfläche des Förderbandes hinausragen, sodass das Wurzelwerk von einer erfindungsgemäß ausgeführten Vorrichtung und/oder durch ein gemäß der Erfindung ausgebildeten Verfahren zumindest zeitweise mit Wasser und/oder Nährmedium versorgt werden. Erfindungswesentlich ist, dass jeweils eine Vorrichtung, ein Verfahren sowie eine Anlage bereitgestellt werden, in der zumindest zeitweise vertikal bewegte Pflanzen oder Pilze auf geeignete Weise von wenigstens einer bewegbaren Düse mit Wasser und/oder Nährmedium versorgt werden. Von besonderem Vorteil ist es hierbei, wenn sich die aufzuziehen Pflanzen oder Pilze auf einem entlang der Förderstrecke bewegten Förderband befinden und derart in dem Förderband fixiert sind, dass die Pflanzen und/oder Pilze während der Fortbewegung entlang der Förderstrecke einer ständigen orbitropalen Neuausrichtung, also einer ständigen Neuausrichtung in Bezug auf das in Richtung des Erdmittelpunkts wirkende Schwerefeld der Erde ausgesetzt sind

Im Folgenden wird die Erfindung ohne Beschränkung des allgemeinen Erfindungsgedankens anhand spezieller Ausführungsbeispiele und unter Bezugnahme auf Figuren näher erläutert Dabei zeigen:
- Fig. 1:: Schematische Darstellung der erfindungsgemäßen Vorrichtung zur Versorgung von Pflanzen und/oder Pilzen mit Wasser und/oder Nährmedium mit einer verfahrbaren Düsenhalterung, an der fünf Düsen befestigt sind,
- Fig. 2:: Schematische Darstellung der erfindungsgemäßen Vorrichtung zur Versorgung von Pflanzen mit Wasser und/oder Nährmedium mit einem Förderband und kultivierten Gewächsen sowie
- Fig. 3:: Schematische Darstellung der erfindungsgemäßen Vorrichtung zur Versorgung von Pflanzen und/oder Pilzen mit Wasser und/oder Nährmedium mit einer verfahrbaren Düsenhalterung, die in eine Wartungsposition verschwenkt wird.

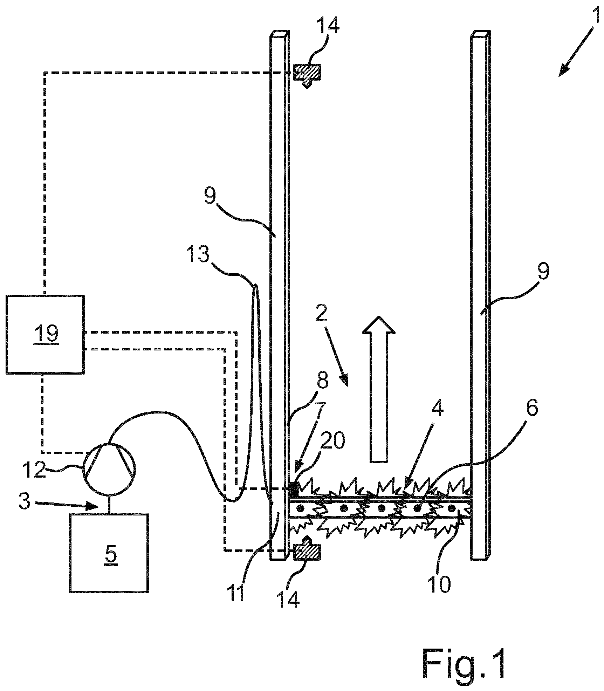

Fig. 1 zeigt in einer schematischen Darstellung den grundsätzlichen Aufbau einer erfindungsgemäß ausgeführten Vorrichtung 1, die zur Nährstoffversorgung von Gewächsen, wie Pflanzen und Pilzen, geeignet ist. Die Vorrichtung 1 verfügt über eine Versorgungseinheit 2 mit einer Mehrzahl von Düsen 6 zur Ausbringung von Wasser und/oder Nährmedium, gemäß dem hier gezeigten Ausführungsbeispiel sind es fünf Düsen 6, die über einen Antriebstrang 8 an einen Antrieb 7 gekoppelt sind. Die in Fig. 1 dargestellten fünf Düsen 6 sind an einer Düsenhalterung 10 in Form einer Strebe befestigt, wobei die beidseitigen Enden der Strebe derart in Führungsschienen 9 aufgenommen sind, dass die Düsenhalterung 10 gemeinsam mit den daran befestigten Düsen 6 in vertikaler Richtung entlang der beiden Führungsschienen 10 nach oben und nach unten bewegt werden kann. Als Teil des Antriebsstrangs 8 ist in zumindest einer der Führungsschienen 9, hier in der in Fig. 1 linken Führungsschiene 9 ein Antriebselement vorgesehen, dass eine gezielte Bewegung der Düsenhalterung 10 relativ zur Führungsschiene 9 ermöglicht. Bei dem Antriebselement kann es sich um ein Zahnrad handeln, das mit einer an der Führungsschiene befestigten Zahnstange zusammenwirkt. Ebenso ist es denkbar, dass der Antriebsstrang 8 über ein Zugelement, etwa ein Seil, Draht oder eine Kette, oder über ein Druckelement, etwa einen Kolben, verfügt, über das eine gezielte Bewegung der Düsenhalterung 10 mit der Düse 6 relativ zu den Führungsschienen 9 initiiert wird.

Der an den Antriebsstrang 8 und damit an das in der Führungsschiene 9 und/oder an der Düsenhalterung 10 vorgesehene Antriebselement gekoppelte Antrieb 7, verfügt gemäß der hier beschriebenen Ausführungsform über einen Elektromotor, der mit elektrischer Energie versorgt wird und das Antriebselement zumindest teilweise in gewünschter Weise in Bewegung versetzt.

Alternativ ist es denkbar, eine Bewegung einer Düsenhalterung 10 dadurch zu bewirken, dass ein hydraulischer oder pneumatischer Antrieb 7 (z.B. über den hydrodynamischen Druck des Nährmediums) vorgesehen ist.

Die in Fig. 1 dargestellten, an der Düsenhalterung 10 befestigten Düsen 6 sind, mit einer schlauchförmigen Versorgungsleitung 13 verbunden, über die den Düsen 6 aus einer zentralen Wasser- und/oder Nährmediumversorgung 5 das zur Versorgung der Pflanzen oder Pilze benötigte Wasser oder Nährmedium zugeführt wird. Hierbei wird das Wasser und/oder Nährmedium mittels einer als Förderelement 12 vorgesehenen Pumpe, die über die Steuereinheit 19 ansteuerbar ist, zu den Düsen 6 gefördert Durch eine gezielte Ansteuerung des Förderelements 12 kann der in der Versorgungsleitung oder am Auslass 4 der Versorgungseinheit 2, also an den Düsenauslässen, herrschende Druck und/oder Volumenstrom des Wasser- und/oder Nährmediumstroms gezielt eingestellt werden. Auf diese Weise kann sowohl die Reichweite der Versorgungseinheit 2 in Bezug auf den Raum, in den Wasser und/oder Nährmedium ausgebracht wird, als auch die Strahlform des aus den Düsen 6 austretenden Wasser und/oder Nährmediumstroms variiert werden. In diesem Zusammenhang ist es beispielsweise denkbar, dass zumindest zeitweise ein Strahl aus den Düsen 6 austritt, dass das austretende Wasser und/oder Nährmedium vernebelt wird oder dass ein Aerosol, das Wasser- und/oder Nährmediumtropfen enthält, in Richtung von während ihres Wachstums bewegten Pflanzen oder Gewächsen ausgebracht wird.

Am oberen und unteren Ende der in Fig. 1 links dargestellten Führungsschiene ist jeweils als Sensoreinheit 14 ein Kontaktsensor vorgesehen, der bei einem Kontakt mit der strebenförmigen Düsenhalterung 10 ein Signal erzeugt und an die Steuereinheit 19 überträgt, sodass letztendlich die Bewegungsgeschwindigkeit, zumindest eine mittlere Bewegungsgeschwindigkeit, der Düsenhalterung 10 mit den daran befestigten Düsen 6 ermittelt werden kann. Auf der Grundlage wenigstens eines ermittelten Geschwindigkeitswerts ist es schließlich möglich, mit Hilfe der Steuereinheit 10 und hinterlegten Sollwerten den Antrieb 7 mit einer Antriebseinheit 20, beispielsweise einem Elektro- oder Hydromotor, derart anzusteuern, dass die Bewegung der Düsenhalterung 10 mit den daran befestigten Düsen 6, insbesondere die Bewegungs- oder Fahrgeschwindigkeit, zu variieren. Bevorzugt erfolgt hierbei die Einstellung der Fahrgeschwindigkeit in Abhängigkeit der Art der mit Wasser und/oder Nährmedium zu versorgenden Pflanzen oder Pilze, der jeweiligen Wachstumsphase und/oder in Abhängigkeit eines gewählten Tag-Nacht-Zyklus. Entsprechend ist eine Bewässerung und/oder Nährstoffversorgung vollkommen automatisch ausführbar.

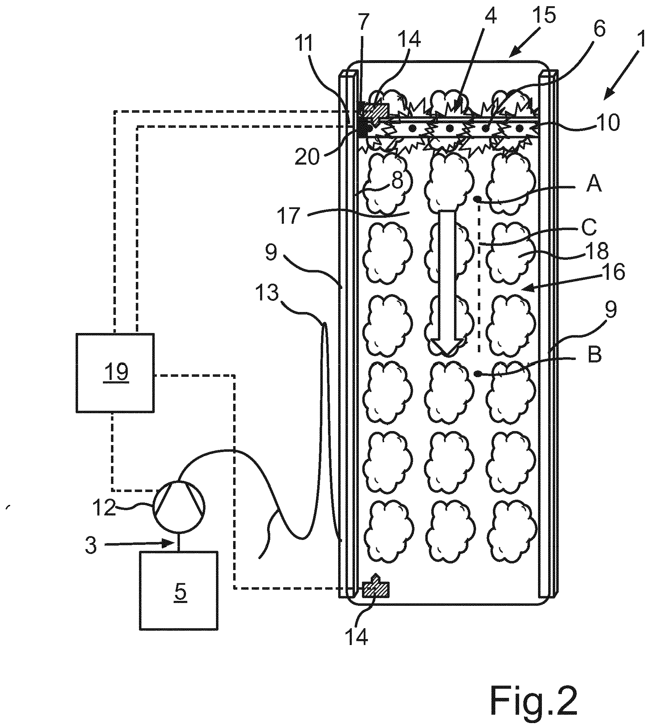

Fig. 2 zeigt in einer schematischen Darstellung eine erfindungsgemäß ausgeführte Vorrichtung 1 zur Bewässerung und Nährstoffversorgung von Pflanzen und Pilzen, die gemäß dem gezeigten Ausführungsbeispiel mit einer Anlage 15 zur automatischen Aufzucht von Gewächsen 18, insbesondere von Pflanzen und Pilzen, kombiniert ist. Fig. 2 zeigt hierbei einen Betriebszustand, in dem auf der Anlage 15 zur automatisierten Pflanzenaufzucht Salatköpf aufgezogen werden und hierfür entlang einer Förderstrecke auf einem Förderband 17 fixiert sind. Die Förderstrecke 17 verfügt über mehreren zwischen Umlenkpunkten angeordnete Förderstreckenabschnitte 16, auf denen die aufzuziehenden bzw. zu kultivierenden Gewächse 18 abwechseln aufwärts und abwärts bewegt werden. Gemäß Fig. 2 befinden sich die aufzuziehenden Salatköpfe auf einem vertikalen Förderstreckenabschnitt 16 der Anlage 15 zur automatisierten Pflanzenaufzucht, wobei das Wurzelwerk in Richtung der erfindungsgemäß ausgeführten Vorrichtung 1 zur Nährstoffversorgung über die Oberfläche des Förderbandes 17 hinausragt. Auf diese Weise wird das Wurzelwerk gezielt aeroponisch durch die bewegten, an einer Düsenhalterung 10 befestigten Düsen 6 mit Wasser und/oder Nährmedium versorgt. Fig. 2 zeigt einen Zustand der erfindungsgemäßen Vorrichtung, in dem sich die Düsenhalterung 10 mit den daran befestigten Düsen 6 in der obersten Endstellung befindet, den als Sensoreinheit 14 vorgesehenen Kontaktsensor berührt, sodass der als Antriebseinheit 20 verwendete Elektromotor des Antriebs 7 umgeschaltet wird und die Düsenhalterung mit den daran befestigten Düsen 6 nunmehr mit konstanter Geschwindigkeit nach unten bewegt wird. Wesentlich ist wiederum, dass die Düsen 6 zu Orten A, B bewegt werden und hier Wasser und/oder Nährmedium ausbringen, die sich in unterschiedlicher Höhe in Bezug auf eine Vertikale C befinden. Gemäß der in Fig. 2 gezeigten Ausführungsform werden die Düsen 6 in einer vertikalen Ebene bewegt, die zumindest nahezu parallel zu der Ebene angeordnet ist, in der das Wurzelwerk der aufzuziehenden Pflanzen bewegt wird.

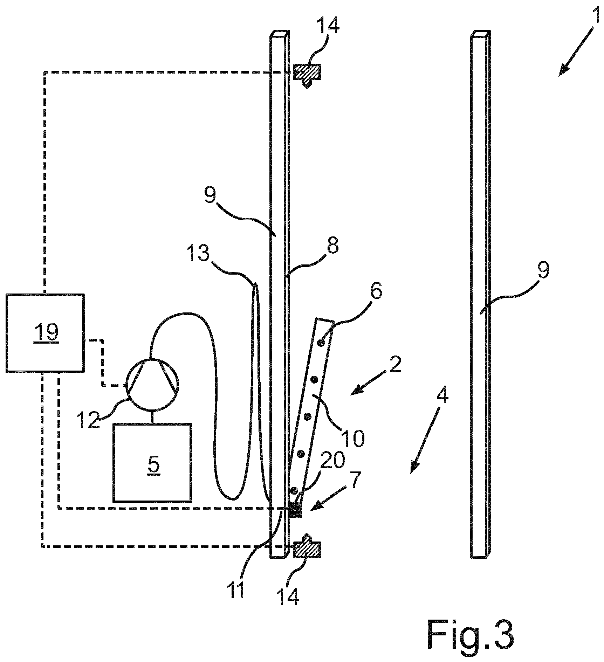

Abschließend zeigt Fig. 3 in einer schematischen Darstellung eine erfindungsgemäß ausgeführte Vorrichtung 1 zur Versorgung von Pflanzen oder Pilzen mit Wasser und/oder Nährmedium in einem Wartungszustand. Um die verwendeten Düsen 6 zur Wartung, Reparatur oder zu ihrem Austausch möglichst einfach auf geeignete Weise erreichen zu können, ist auf einer Seite Düsenhalterung ein Schwenk- und/oder Klappmechanismus 11 vorgesehen, sodass die Düsenhaltung 10 gemeinsam mit den daran befestigten Düsen 6 nach oben geklappt werden kann, sodass die Düsenhalterung 10 daraufhin zumindest nahezu parallel zu der in Fig. 3 linken Führungsschiene 9 angeordnet ist. Eine Wartung, Reparatur oder ein Austausch von Düsen kann so verhältnismäßig einfach von einer Seite der erfindungsgemäßen Nährstoffversorgungsvorrichtung aus erfolgen.

### Bezugszeichenliste

- 1: Vorrichtung zur Bewässerung und/oder Nährstoffversorgung
- 2: Versorgungseinheit
- 3: Einlass
- 4: Auslass
- 5: Wasser- und/oder Nährmediumversorgung
- 6: Düse
- 7: Antrieb
- 8: Antriebsstrang
- 9: Führungsschiene
- 10: Düsenhalterung
- 11: Schwenk- und/oder Klappmechanismus
- 12: Förderelement
- 13: Versorgungsleitung
- 14: Sensoreinheit
- 15: Anlage zur automatisierten Pflanzen- oder Pilzaufzucht
- 16: Förderstreckenabschnitt
- 17: Förderband
- 18: Gewächs
- 19: Steuereinheit
- 20: Antriebseinheit

- A: erster Ort zur Ausbringung von Wasser und/oder Nährmedium
- B: zweiter Ort zur Ausbringung von Wasser und/oder Nährmedium
- C: Vertikale

## Patentansprüche

1. Vorrichtung (1) zur Bewässerung und Nährstoffversorgung von Pflanzen und Pilzen mit einer Versorgungseinheit (2), die über einen wenigstens mittelbar mit einer Wasser- und/oder Nährmediumversorgung (5) verbindbaren Einlass (3) verfügt und die einen Auslass (4) aufweist, durch den an wenigstens zwei Orten (A, B), die in Bezug auf eine Vertikale (C) in unterschiedlichen Höhen angeordnet sind, Wasser und/oder Nährmedium ausbringbar ist,
**dadurch gekennzeichnet, dass** die Versorgungseinheit (2) über einen mit einem Antrieb (7) verbindbaren Antriebsstrang (8) und am Auslass (4) über wenigstens eine an den Antriebsstrang (8) gekoppelte Düse (6) zur Ausbringung des Wassers und/oder Nährmediums verfügt, wobei die Düse (6) aufgrund einer Aktivierung des Antriebsstrangs (8) zu wenigstens zwei der in unterschiedlicher Höhe angeordneten Orte (A, B) bewegbar ist

2. Vorrichtung nach Anspruch 1,
**dadurch gekennzeichnet, dass** der Antriebsstrang (8) wenigstens eine zumindest annähernd vertikal angeordnete Führungsschiene (9) aufweist, mit der die Düse (6) wenigstens mittelbar verbunden ist und zu der die Düse (6) bei Aktivierung des Antriebsstrangs (8) eine Relativbewegung ausführt.

3. Vorrichtung nach Anspruch 2,
**dadurch gekennzeichnet, dass** die Düse (6) über eine Düsenkopfhalterung (10) zumindest mittelbar mit der wenigstens einen Führungsschiene (9) verbunden ist

4. Vorrichtung nach Anspruch 2 oder 3,
**dadurch gekennzeichnet, dass** zwischen der Düsenkopfhalterung (10) und der wenigstens einen Führungsschiene (9) ein Schwenk- und/oder Klappmechanismus (11) angeordnet ist

5. Vorrichtung nach einem der vorangehenden Ansprüche,
**dadurch gekennzeichnet, dass** der Antriebsstrang (8) wenigstens einen Tragarm mit zumindest einem Gelenk aufweist, an dem die Düse (6) wenigstens mittelbar befestigt ist und durch den die Düse (6) zu den wenigstens zwei Orten (A, B), die sich in unterschiedlicher Höhe, bewegbar ist.

6. Vorrichtung nach einem der vorangehenden Ansprüche,
**dadurch gekennzeichnet, dass** die Versorgungseinheit (2) wenigstens ein Förderelement (12) aufweist, durch das ein Druck und/oder ein Volumenstrom eines zur Düse (6) geförderten Wasser- und/oder Nährmediumstroms wenigstens bereichsweise gezielt veränderbar ist.

7. Vorrichtung nach einem der vorangehenden Ansprüche,
**dadurch gekennzeichnet, dass** der Antriebsstrang (8) zur Aktivierung an einen Antrieb (7) mit wenigstens einer elektrischen, pneumatischen und/oder hydraulischen Antriebseinheit (20) gekoppelt ist.

8. Vorrichtung nach einem der vorangehenden Ansprüche,
**dadurch gekennzeichnet, dass** der Antriebsstrang (8) zur Aktivierung an einen Antrieb (7) mit wenigstens einer hydraulischen Antriebseinheit (20), der zur Nährstoffversorgung vorgesehenes Wasser- und/oder Nährmedium als Antriebsfluid zugeführt wird, gekoppelt ist.

9. Vorrichtung nach einem der vorangehenden Ansprüche,
**dadurch gekennzeichnet, dass** wenigstens eine Sensoreinheit (14) vorgesehen ist, mit der eine Position, eine Geschwindigkeit und/oder eine Beschleunigung der Düse (6) erfassbar ist

10. Verfahren zur Nährstoffversorgung von Pflanzen und Pilzen bei dem einer Versorgungseinheit (2) Wasser- und/oder Nährmedium zugeführt wird und das Wasser und/oder Nährmedium an wenigstens zwei Orten (A, B), die in Bezug auf eine Vertikale in unterschiedlichen Höhen angeordnet sind, aus einem Auslass (5) der Versorgungseinheit (2) in eine Umgebung, in der die Pflanzen und/oder Pilze angeordnet sind, ausgebracht wird,
**dadurch gekennzeichnet, dass** zur Ausbringung des Wassers und/oder Nährmediums wenigstens eine Düse (6) durch einen von einem Antrieb (7) aktivierbaren Antriebsstrang (8) zu wenigstens zwei der in unterschiedlicher Höhe angeordneten Orte (A, B) bewegt wird.

11. Verfahren nach Anspruch 10,
**dadurch gekennzeichnet, dass** die Düse (6) in vertikaler und horizontaler Richtung bewegt wird.

12. Verfahren nach Anspruch 10 bis 11,
**dadurch gekennzeichnet, dass** die Düse (6) zumindest während einer Bewegung zwischen zwei Umkehrpunkten mit konstanter Geschwindigkeit bewegt wird.

13. Verfahren nach einem der Ansprüche 10 bis 12,
**dadurch gekennzeichnet, dass** eine Richtung, ein Druck, ein Volumenstrom und/oder eine Strahlform, mit der Wasser und/oder Nährmedium in die Umgebung, in der die Pflanzen und/oder Pilze angeordnet sind, verändert wird.

14. Anlage (15) zur automatisierten Pflanzen- und Pilzaufzucht mit einer Vorrichtung (1) nach einem der Ansprüche 1 bis 9 und/oder zur Umsetzung des Verfahrens einem der Ansprüche 10 bis 13.

15. Anlage zur automatisierten Pflanzen- und Pilzaufzucht nach Anspruch 14, mit wenigstens einem Förderstreckenabschnitt (16), auf dem die aufzuziehenden Pflanzen und/oder Pilze in zumindest nahezu vertikaler Richtung bewegt werden, wobei die Pflanzen- und/oder Pilze relativ zu einem entlang des Förderstreckenabschnitt (16) bewegten Förderband (17) fixiert sind, sodass Wurzelwerk der Pflanzen und/oder Myzelien der Pilze auf einer Seite des Förderbandes (17) herausragen und das Wurzelwerk und/oder die Myzelien von der Vorrichtung (1) nach einem der Ansprüche 1 bis 9 und/oder gemäß dem Verfahren nach einem der Ansprüche 10 bis 13 zumindest zeitweise mit Wasser und/oder Nährmedium versorgt wird.
